# FASCICULE DE BREVET EUROPEEN

(11) **EP 0 900 822 B1**
(45) Date de publication et mention de la délivrance du brevet: **17.03.2004**
(21) Numéro de dépôt: 98402118.8
(22) Date de dépôt: 26.08.1998
(51) Int. Cl.: C08K 5/101, C08L 95/00

(54) **Liant bitumineux, composition et utilisation**
Bituminöses Bindemittel, seine Zusammensetzung und seine Verwendung
Bituminous binder, its composition and its use

(30) Priorité: 05.09.1997 FR 9711079
(43) Date de publication de la demande: 10.03.1999
(73) Titulaire: Appia, 92130 Issy les Moulineaux (FR)
(72) Inventeur: Pasquier, Michel, 69960 Corbas (FR)
(74) Mandataire: Rousset, Jean-Claude

(56) Documents cités:
- DE-A- 19 519 539
- US-A- 2 877 129
- US-A- 3 366 500

## Description

Les liants bitumineux sont utilisés notamment dans l'industrie routière afin d'assurer la liaison entre les granulats ou entre le support et les granulats. On distingue à cet égard différentes possibilités:
- Le liant bitumineux est mélangé à chaud avec des granulats, on parle alors d'enrobés à chaud, le liant bitumineux assurant la liaison entre les granulats.
- Le liant bitumineux est répandu à chaud sur le support, puis les granulats sont répandus sur cette couche bitumineuse qui assure leur collage au support. On parle alors d'enduits superficiels aux liants anhydres.
- Le liant bitumineux est mélangé à froid avec les granulats, on parle alors d'enrobés à froid réalisés avec une émulsion aqueuse de produit bitumineux.
- Le liant bitumineux est répandu à froid, on parle alors d'enduits superficiels réalisés à l'émulsion aqueuse de liant bitumineux.

Lorsqu'on réalise ces mélanges ou ces répandages il est toujours nécessaire que la consistance du liant soit telle qu'elle permette un bon mouillage des granulats et qu'ensuite la consistance du liant évolue afin que les enrobés ou les enduits ainsi réalisés acquièrent des performances mécaniques les rendant propres à leur usage routier.

Une consistance initiale plus fluide du liant est obtenue soit par chauffage du liant bitumineux, soit par fluidification ou fluxage (ces deux termes désignent la même opération, le choix de l'un ou de l'autre étant habituellement fonction de la nature de l'additif) par apport d'un solvant ou fluxant d'origine pétrolière ou carbochimique, soit par mise en émulsion aqueuse du liant bitumineux, soit par une combinaison des méthodes précédentes.

L'invention concerne plus particulièrement un perfectionnement au procédé par fluidification ou fluxage.

Les solvants actuellement utilisés sont d'origine pétrolière ou carbochimique. Après l'application du liant, ils s'évaporent pour permettre à celui-ci de recouvrer sa consistance élevée. Les solvants ainsi dispersés progressivement dans l'atmosphère entraînent une pollution de celui-ci et des organismes aérobies et une contribution à l'effet de serre. De plus, ils contiennent le plus souvent des composés aromatiques polycycliques dont certains au moins sont reconnus comme mutagènes. L'utilisation de ces solvants participe à l'épuisement des ressources fossiles.

La présence des solvants précités pose également des problèmes de sécurité, car ils abaissent considérablement le point éclair et nécessitent des mesures strictes de protection contre l'incendie au stockage et durant le transport.

Le but de l'invention est de remédier à tout ou partie des inconvénients ci-dessus, sans affecter les performances routières du liant bitumineux ni ses conditions de mise en oeuvre.

L'invention vise notamment un liant bitumineux pour la construction de routes, contenant du bitume et un fluidifiant, et prévoit que le fluidifiant comprend au moins un monoester d'acide gras propre à se transformer chimiquement au contact de l'air, après répandage du liant, pour augmenter la viscosité de celui-ci.

Le terme monoester désigne des esters dont la molécule contient un seul groupe -CO-O-, par opposition notamment aux triglycérides constitutifs des corps gras, qui sont des triesters d'acides gras.

Les monoesters d'acide gras ne sont ni toxiques ni nuisibles à l'environnement et possèdent un point éclair de l'ordre de 200 °C, au lieu de 50 à 85 °C environ pour les fluidifiants ou fluxants pétroliers ou carbochimiques. Ils peuvent être obtenus par transestérification à partir d'huiles végétales qui sont des produits renouvelables, de sorte que leur utilisation ne contribue pas à l'augmentation du CO₂ atmosphérique et à l'effet de serre. Au contraire, l'incorporation dans la route de produits dérivés des plantes, qui consomment du gaz carbonique pour la synthèse chlorophyllienne, contribue à la diminution de celui-ci.

Les huiles végétales sont issues de la trituration de différentes sortes de graines. Chimiquement elles se présentent sous la forme de triglycérides, c'est-à-dire de triesters résultant de la condensation de trois molécules d'acide gras et d'une molécule de glycérol. Les acides gras peuvent comporter des doubles liaisons carbone-carbone en nombre variable selon la plante dont provient l'huile. Les acides gras et les esters correspondants possèdent un pouvoir réducteur qui est fonction du nombre de doubles liaisons et de la proximité de celles-ci dans la chaîne hydrocarbonée. Ce pouvoir réducteur est mesuré par l'indice d'iode, et se manifeste par une polymérisation sous l'action de l'oxygène, qui entraîne un épaississement et un durcissement. Ce phénomène est connu sous le nom de siccativation. La polymérisation peut être catalysée par des sels métalliques, notamment des sels organiques de cobalt, de manganèse et de zirconium.

Alors que les triglycérides, notamment sous forme d'huiles végétales, ne permettent pas de fluidifier convenablement les liants bitumineux, ce résultat est obtenu en utilisant des monoesters, notamment méthyliques, qui peuvent être obtenus par transestérification à partir de ces huiles.

Les esters méthyliques résultant de la transestérification des huiles végétales au moyen de l'alcool méthylique sont des produits connus, qui ont été développés initialement en tant que substituts du gazole.

Les monoesters utilisés dans l'invention peuvent également être obtenus à partir d'huiles animales, ou d'autres sources.

On constate que les monoesters d'acides gras sont de bons solvants du bitume, même à froid, et que leur faible viscosité leur confère un pouvoir fluxant équivalent ou même supérieur à celui des fluxants d'origine pétrolière couramment utilisés.

En revanche, ces esters ne sont pas volatils, leur température initiale de distillation étant supérieure à 300 °C. Ils présentent une excellente biodégradabilité.

En l'absence d'évaporation de solvants, l'augmentation de consistance du liant après répandage fait appel à des réactions chimiques en présence de l'oxygène de l'air. Ces réactions, catalysées de manière connue par des sels métalliques, comprennent la formation de ponts peroxyde -O-O- sur les chaînes insaturée des acides gras. Ces ponts sont instables et conduisent à la formation de radicaux libres, qui attaquent d'autres chaînes, réalisant par propagation une polymérisation-réticulation des esters.

Des caractéristiques optionnelles de l'invention, complémentaires ou alternatives, sont énoncées ci-après:
- Le fluidifiant comprend au moins un monoester d'un acide gras et d'un alcool comportant au plus 4 atomes de carbone.
- Ledit ou lesdits monoesters, ou l'huile dont ils proviennent, possèdent un indice d'iode supérieur ou égal à 120. L'indice d'iode permet de classer la réactivité des huiles et de leurs esters vis-à-vis de l'oxygène de l'air et d'évaluer leur aptitude à durcir et à former des films. Il représente la masse d'iode en grammes susceptible d'être fixé par 100 grammes d'huile.
- Le liant contient en outre au moins un catalyseur de la polymérisation du fluidifiant sous l'action de l'oxygène, tel qu'un octoate ou naphténate de cobalt, de manganèse ou de zirconium.
- Le liant contient comme catalyseur un mélange d'au moins deux sels de métaux différents.
- Le liant est sous forme d'une émulsion composée d'une phase bitumineuse et d'une phase aqueuse, le fluidifiant et le cas échéant le catalyseur étant contenus dans la phase bitumineuse.

Les caractéristiques et avantages de l'invention seront exposés plus en détail dans la description donnée ci-après de quelques exemples de réalisation.

Tous les liants décrits dans les exemples ci-après sont réalisés à partir de bitumes provenant de la raffinerie de Lavéra de la Société BP.

Les pourcentages sont donnés en masse.

### Exemples 1 à 3:

On prépare des liants 1 à 3 ayant la composition générale suivante:
- bitume 70/100 91 %
- ester méthylique 8,8 %
- octoate de cobalt 0,2 %,
en utilisant des esters méthyliques dérivés de différentes huiles végétales et ayant des indices d'iode différents, à savoir:
- liant 1: huile de tournesol, indice d'iode environ 120;
- liant 2: huile de lin, indice d'iode environ 180;
- liant 3: huile de tournesol isomérisée, indice d'iode environ 140.

Le traitement d'isomérisation a pour effet d'augmenter le nombre de doubles liaisons adjacentes et par conséquent l'indice d'iode.

Bien que les exemples ci-dessus utilisent un seul sel métallique comme catalyseur, il peut être avantageux de combiner des sels de différents métaux choisis notamment parmi le cobalt, le manganèse, le zirconium et le calcium, de manière à permettre une siccativation à coeur en évitant un effet de peau.

### Exemple 4:

On prépare un liant sous forme d'émulsion bitumineuse en mélangeant une phase bitumineuse et une phase aqueuse.

Des émulsions de bitumes, éventuellement modifiées et/ou fluxées, sont utilisées pour des enduits superficiels d'usure. Les techniques à l'émulsion permettent de s'affranchir dans une certaine mesure des contraintes climatiques et d'allonger les périodes d'exécution de l'enduit au cours de l'année (essentiellement au printemps et à l'automne). Dans ce cas, le fluxage apporte une consistance initiale faible facilitant la mise en place des granulats lors de la réalisation de l'enduit (mise en place de la "mosaïque").

Ici encore, selon l'invention, on utilise à cet effet des esters méthyliques d'huiles végétales, en choisissant un catalyseur de siccativation insensible à l'hydrolyse lors de la formulation de l'émulsion, notamment l'octoate de cobalt. On cumule alors les avantages sanitaires et écologiques cités plus haut et les avantages d'une technique à froid, à savoir moindre consommation d'énergie et meilleure sécurité lors de la mise en oeuvre grâce à l'absence de températures élevées.

Dans l'exemple, la phase bitumineuse de l'émulsion a la composition pondérale suivante, calculée par rapport à la masse totale de l'émulsion:
- bitume 57,9 %
- ester méthylique de tournesol 2 %
- octoate de cobalt à 6 % de Co 0,1 %.

La composition de la phase aqueuse est la suivante:
- Émulsamine L60 0,2 %
- acide chlorhydrique à 37 % 0,2 %
- eau 39,6 %.

Émulsamine L60 est la désignation commerciale d'un émulsifiant fourni par la Société CECA.

Ces deux phases sont portées respectivement à 145 °C et à 35 °C et mélangées dans un moulin colloïdal afin d'obtenir une émulsion.

Des mesures du point de ramollissement bille et anneau ont été effectuées selon la norme française NF T66-008 sur des échantillons des liants 1 à 4, comparativement à un liant de référence ayant la composition suivante:
- bitume 70/100 91 %
- BP-Flux 9 %.

Des couches de 1 mm des différents échantillons ont été exposées ensemble à l'extérieur et à l'air libre, en été et à l'abri du soleil, ce qui représente des conditions proches de la réalité. L'émulsion du liant 5 avait préalablement été rompue par évaporation pendant quelques heures en laboratoire.

Les résultats en fonction du temps sont donnés dans le tableau.

**Tableau**

| Temps (j) | Bille et anneau (°C) | | | | |
|---|---|---|---|---|---|
| | Référence | Liant 1 | Liant 2 | Liant 3 | Liant 4 |
| 7 | 30,4 | 27,9 | 28,5 | 28,2 | 29,1 |
| 14 | 37,2 | 32,3 | 36,4 | 34,0 | 37,2 |
| 28 | 39,9 | 35,2 | 35,7 | 35,2 | 41,5 |

Ces résultats montrent pour tous les exemples une cinétique très proche de celle de la référence et parfaitement acceptable sur les chantiers.

### Exemple 5:

Cet exemple concerne un liant destiné à l'enrobage de granulats.

La composition du liant est la suivante:
- bitume 86,7 %
- ester méthylique de tournesol 12 %
- naphténate de cobalt à 6 % de Co 0,5 %
- octoate de zirconium à 18 % de Zr 0,8 %.

Ce liant permet l'enrobage de formules denses ou ouvertes, les granulats étant préchauffés à environ 100 °C. L'enrobé obtenu peut être conservé quelque temps.

L'enrobage par des liants en émulsion est également possible.

On constate que les émulsions bitumineuses selon l'invention sont beaucoup plus fines et mouillent mieux les granulats que les émulsions bitumineuses connues. Ceci est dû au caractère fortement polaire des monoesters d'acides gras, qui favorise l'émulsification.

## Revendications

1. Liant bitumineux pour la construction de routes, contenant du bitume et un fluidifiant, **caractérisé en ce que** le fluidifiant comprend au moins un monoester méthylique d'acide gras propre à se transformer chimiquement au contact de l'air après répandage du liant, pour augmenter la viscosité de celui-ci, le monoester étant choisi parmi les monoesters méthyliques d'huile de tournesol, d'huile de lin et d'huile de tournesol isomérisée.

2. Liant selon la revendication 1, dans lequel ledit ou lesdits monoesters, ou ladite huile, possèdent un indice d'iode supérieur ou égal à 120, l'indice d'iode représentant la masse d'iode en grammes susceptible d'être fixé par 100 grammes d'huile.

3. Liant selon l'une des revendications précédentes, contenant en outre au moins un catalyseur de la polymérisation du fluidifiant sous l'action de l'oxygène.

4. Liant selon la revendication 3, contenant comme catalyseur un mélange d'au moins deux sels de métaux différents.

5. Liant selon l'une des revendications précédentes sous forme d'une émulsion composée d'une phase bitumineuse et d'une phase aqueuse, le fluidifiant et le cas échéant le catalyseur étant contenus dans la phase bitumineuse.

## Patentansprüche

1. Asphaltbinder für den Straßenbau, der Bitumen und einen Verflüssiger enthält, **dadurch gekennzeichnet, daß** der Verflüssiger wenigstens einen fettsauren Methyl-Monoester aufweist, der in der Lage ist, sich bei Kontakt mit Luft nach Vergießen des Binders chemisch zu verändern, um die Viskosität von diesem zu erhöhen, wobei der Monoester aus den Methylmonoestern des Sonnenblumenöls, des Leinöls bzw. des isomerisierten Sonnenblumenöls gewählt wird.

2. Binder nach Anspruch 1, bei dem der oder die Monoester, oder das Öl, eine Iodzahl größer oder gleich 120 besitzen, wobei die Iodzahl die Iodmasse in Gramm darstellt, die in der Lage ist durch 100 g Öl fixiert zu werden.

3. Binder nach einem der vorhergehenden Ansprüche, der weiterhin wenigstens einen Katalysator der Polymerisierung des Verflüssigers unter Einwirkung von Sauerstoff enthält.

4. Binder nach Anspruch 3, der als Katalysator eine Mischung aus wenigstens zwei unterschiedlichen Metallsalzen enthält.

5. Binder nach einem der vorhergehenden Ansprüche in Form einer Emulsion, gebildet aus einer Bitumenphase und einer wässerigen Phase, wobei der Verflüssiger und gegebenenfalls der Katalysator in der Bitumenphase enthalten sind.

## Claims

1. Bituminous binder for road construction, containing bitumen and a thinning agent, **characterised in that** the thinning agent comprises at least one methyl monoester of fatty acid adapted to chemically transform upon contact with the air after the binder has been spread, to increase the viscosity of the latter, the monoester being selected from methyl monoesters of sunflower oil, linseed oil and isomerised sunflower oil.

2. Binder according to claim 1, in which the said monoester or monoesters, or said oil, have an iodine value greater than or equal to 120, the iodine value representing the iodine mass in grams which may be fixed by 100 grams of oil.

3. Binder according to one of the preceding claims, furthermore containing at least one catalyst for the polymerisation of the thinning agent under the action of oxygen.

4. Binder according to claim 3, containing, as a catalyst, a mixture of at least two different metal salts.

5. Binder according to one of the preceding claims, in the form of an emulsion consisting of a bituminous phase and an aqueous phase, the thinning agent, and where appropriate the catalyst, being contained in the bituminous phase.
